# EUROPÄISCHE PATENTSCHRIFT

(11) **EP 2 969 653 B1**
(45) Veröffentlichungstag und Bekanntmachung des Hinweises auf die Patenterteilung: **18.04.2018**
(21) Anmeldenummer: 14772291.2
(22) Anmeldetag: 15.05.2014
(51) Int. Cl.: B60R 1/076

(54) **RÜCKSPIEGELANORDNUNG FÜR KRAFTFAHRZEUGE**
REAR-VIEW MIRROR ASSEMBLY FOR MOTOR VEHICLES
SYSTÈME DE RÉTROVISEUR POUR VÉHICULES AUTOMOBILES

(30) Priorität: 15.03.2013 DE 102013204551
(43) Veröffentlichungstag der Anmeldung: 20.01.2016
(73) Patentinhaber: Magna Mirrors Holding GmbH, 63877 Sailauf (DE)
(72) Erfinder: ROUARD, Denis, 63930 Neunkirchen (DE)
(74) Vertreter: Völger, Silke Beatrix
(86) Internationale Anmeldenummer: PCT/EP2014/059985
(87) Internationale Veröffentlichungsnummer: WO 2014/206640

(56) Entgegenhaltungen:
- EP-A1- 2 042 375
- EP-A2- 0 802 083

## Beschreibung

Die vorliegende Erfindung betrifft eine Rückspiegelanordnung für Kraftfahrzeuge.

Fahrzeugaußenspiegel bestehen im Wesentlichen aus einem Spiegelkopf, in dem das Spiegelglas auf einem Spiegelglasträger gehalten ist, sowie einem Spiegelfuß, der eine Anbindung an die Fahrzeugkarosserie ermöglicht. Der Spiegelfuß und der Spiegelglasträger sind dabei gelenkig miteinander verbunden. Die gelenkige Anbindung dieser Teile ist eine Voraussetzung für die Zulassung von Kraftfahrzeugen, um die Verkehrssicherheit von anderen Verkehrsteilnehmern bei einem Verkehrsunfall vor Verletzungen zu schützen oder deren Ausmaß oder Folgen zu mildern. Durch die gelenkige Verbindung zwischen Spiegelfuß und Spiegelkopf kann der Außenspiegel von einer sogenannten Betriebsstellung, die zur Beobachtung des nachfolgenden Verkehrs geeignet ist, in eine Anklappstellung in Fahrtrichtung und entgegen der Fahrtrichtung bewegt werden.

Eine derartige gelenkige Verbindung, die im Wesentlichen aus einem die Gelenkachse bildenden Zapfen und einer den Zapfen umgebenden Gelenkpfanne besteht, ist beispielsweise aus der EP 1 170 175 A2 bekannt. Hierbei ist die Lage des Spiegelglasträgers relativ zum Spiegelfuß in einem definierten Schwenkwinkel durch Einrasten von Rastelementen in eine Rastkontur sicherbar. Der Spiegelglasträger ist bei eingerastetem erstem Rastelement gegen den Druck eines Federelementes so weit in Richtung der Schwenkachse verlagerbar, dass das zweite Rastelement durch Verschwenken des Spiegelglasträgers aus der zweiten Rastkontur ausrastbar ist. Der Zapfen ist einseitig am Spiegelfuß angeformt und in einer Lageröffnung des Spiegellagerträgers aufgenommen und geführt. Das Federelement ist hier als Hülse mit Rastzungen ausgeführt, die zwischen Zapfen und Lagerbuchse in der Gelenkpfanne eingesetzt ist. Die Ausführung der Hülse ist dabei derart, dass die Rastzungen einerseits eine zuverlässige Verrastung der Hülse mit dem Spiegelträger auf dem Spiegelfuß gewährleisten und gleichzeitig in der Art einer Druckfeder wirken, durch die die Hülse gegen den Spiegelfuß gespannt wird. Am oberen Ende der Hülse ist ein Sicherungsbund angeformt, durch den eine sichere Fixierung der Hülse am Spiegelträgers erzielt wird.

Eine weitere Ausführungsform einer gelenkigen Verbindung zwischen Spiegelfuß und Spiegelkopf bzw. Spiegelglasträger ist aus der EP 0748 719 A2 bzw. der EP 2 042 375 A1 bekannt. EP2042375 A1 beschreibt einen Außenspiegel gemäß dem Oberbegriff des Patentanspuchs 1. Das Gelenk weist hierbei ebenfalls einen spiegelfußfesten Lagerzapfen sowie eine als Hülse ausgebildete Lagerbuchse auf. Die Lagerbuchse ist hierbei über eine Feder koaxial auf den Lagerzapfen aufgedrückt. Die als Spiraldruckfeder ausgebildete Feder stützt sich dabei einerseits auf einem ringförmigen Stützflansch der Hülse ab und andererseits liegt das gegenüberliegende Ende der Feder über eine Zwischenscheibe an einer Arretierplatte bzw. an einer Arretierhülse aus Harz an. Die Arretierplatte bzw. Arretierhülse wird nach dem Einsetzen der Druckfeder und der Zwischenscheibe an der mit dem Spiegelglasträger in Verbindung stehenden Lagerbuchse fixiert.

Aufgabe der vorliegenden Erfindung ist es die eingangs genannten Gelenkanordnungen für Fahrzeugaußenspiegel derart weiterzubilden, dass eine einfache und kostengünstige Montage der Einzelteile der Gelenkanordnung möglich ist.

Diese Aufgabe wird durch die im Anspruch 1 angegebenen Merkmale gelöst.

Durch die im Anspruch 1 angegebenen Merkmale und der Ausführung der Gelenkanordnung ist eine einfache und schnelle Montage der Rückspiegelanordnung möglich. Dies wird dadurch erreicht, dass das Sicherungselement sowohl eine kraft- und/oder formschlüssige Verbindung zwischen Lagerbuchse und Lagerzapfen erreicht und sich zusätzlich über eine Anzahl Lagerstellen an der Lagerbuchse einerseits und einer Anzahl Gegenlagerstellen an dem Lagerzapfen andererseits zur Erzielung einer Vorspannung in z-Richtung der Bauteile gegeneinander abstützt und weiterhin einen Toleranzausgleich der Bauteile relativ zueinander in Richtung der Schwenkachse ermöglicht.

Weitere vorteilhafte Ausgestaltungen und Weiterbildungen der erfindungsgemäßen Rückspiegelanordnung ergeben sich aus den Unteransprüchen.

Bevorzugte Ausführungsformen der Rückspiegelanordnung für ein Kraftfahrzeug werden nachfolgend beispielshalber beschrieben, wobei veranschaulichend auf die beigefügten Zeichnungen Bezug genommen wird.

Es zeigen:
- Fig. 1: eine perspektivische Ansicht der Gelenkverbindung in einer ersten Ausführungsform mit Spiegelglasträger und einem Teil des Spiegelfußes,
- Fig. 2: eine Rückansicht eines Ausschnitts der Gelenkverbindung gemäß Figur 1,
- Fig. 3: eine Draufsicht auf die Gelenkverbindung,
- Fig. 4: eine Vorderansicht eines Ausschnitts der Gelenkverbindung gemäß Figur 1,
- Fig. 5: in einer Explosionsdarstellung den Lagerzapfen des Spiegelfußes, die Lagerbuchse des Spiegelglastragelementes und das Sicherungselement gemäß der ersten Ausführungsform,
- Fig. 6: in einer perspektivischen Ansicht ein Ausschnitt der Gelenkverbindung in einer zweiten Ausführungsform; und
- Fig. 7: in einer Explosionsdarstellung einen Ausschnitt des Spiegelfußes mit Lagerzapfen, das Sicherungselement und einen Ausschnitt des Spiegelglastragelementes mit Lagerbuchse nach der zweiten Ausführungsform.

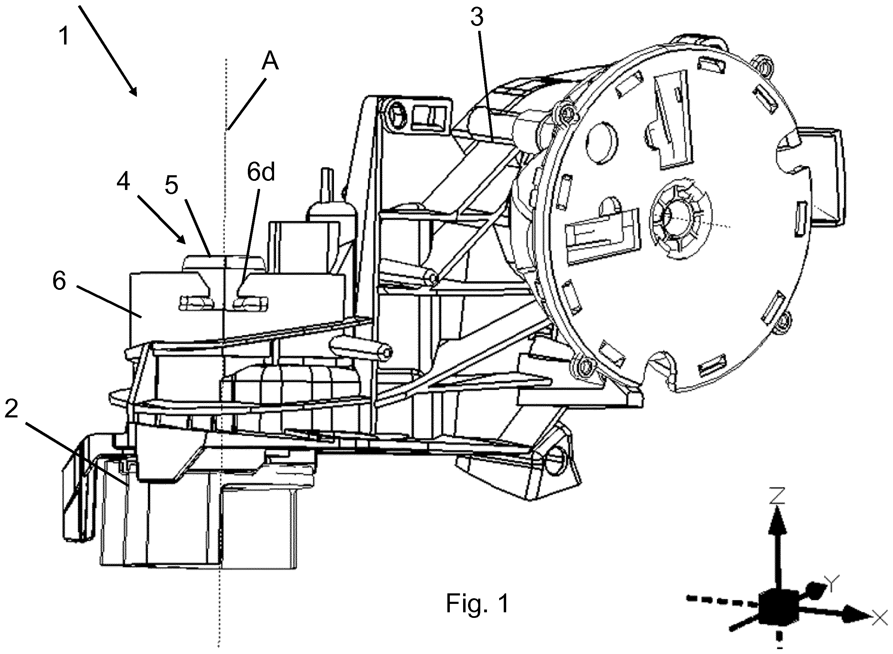

Figur 1 zeigt in einer perspektivischen Ansicht eine Außenspiegelanordnung umfassend einen teilweise dargestellten Spiegelfuß 2, ein Spiegelglasträgerelement 3 als Teil eines Spiegelkopfes sowie eine zwischen Spiegelfuß 2 und Spiegelglasträgerelement 3 angeordnete Gelenkverbindung 4. Der Spiegelfuß 2 dient dabei zur Anbindung der Außenspiegelanordnung an der Fahrzeugkarosserie an der Fahrer- bzw. Beifahreraußenseite des Kraftfahrzeugs. Das Spiegelglasträgerelement 3 ist im montierten Zustand der Außenspiegelanordnung in einer Gehäusehalbschale des Spiegelkopfes des Außenspiegels aufgenommen und hält die Glasbaugruppe. Das Spiegelglasträgerelement 3 ist über die Gelenkverbindung 4 verschwenkbar an dem Spiegelfuß 2 angeordnet. Die Gelenkverbindung 4 wird hierbei über einen an dem Spielgelfuß 2 angeordneten Lagerzapfen 5, der in einer Lagerbuchse 6 drehbar gelagert ist, gebildet. Die Gelenkachse ist durch die Achse A gezeigt. Die Lagerbuchse 6 umfasst einen hülsenförmiger Abschnitt 6a, der an dem dem Spiegelfuß 2 zugewandten Endbereich des Spiegelglasträgerelementes 3 angeformt ist.

Wie eingangs bereits beschrieben, ist der das Spiegelglasträgerelement 3 umfassende Spiegelkopf schwenkbar an dem Spiegelfuß 2 gehalten. Dies ermöglicht eine Verschwenkung des Spiegelkopfes aus einer Betriebsstellung in eine Anklappstellung und umgekehrt in und entgegen der Fahrtrichtung des Kraftfahrzeugs. In Fig. 1 ist in einem Koordinatensystem die Fahrzeughochachse mit z, die Fahrzeuglängsachse mit x und die Fahrzeugquerachse mit y bezeichnet.

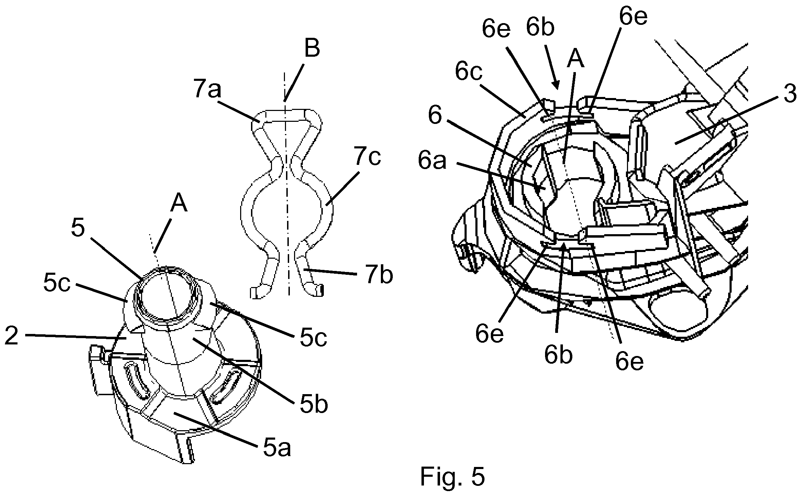

Figur 5 zeigt in einer Einzelteildarstellung einen Ausschnitt des Spiegelfußes 2 mit Lagerzapfen 5, ein Sicherungselement 7 sowie einen Ausschnitt des Spiegelglasträgerelementes 3 mit Lagerbuchse 6. Aus den Abbildungen kann man ersehen, dass der Lagerzapfen 5 eine ausgehend von einem scheibenförmigen Grundelement 5a sich in z-Richtung erstreckende hohlzylindrische Hülse 5b ist. Im oberen Endbereich der Hülse 5b sind diametral gegenüberliegend zwei nasenförmige radial sich nach außen erstreckende Lagerstellen 5c ausgebildet. Die nach oben weisende Fläche der Lagerstellen 5c ist dabei ausgehend von der Oberfläche der Hülse 5b schräg in z-Richtung nach unten verlaufend ausgeführt. Die nach unten weisende Fläche ist rechtwinklig zu der Oberfläche ausgeführt. In einer weiteren nicht dargestellten Ausführungsform ist anstelle der radial ausgebildeten Nasen ein umlaufender radial sich erstreckender ringförmiger Lagerbereich angeformt. Der Lagerzapfen 5 wird bei der Montage der Außenspiegelanordnung in z-Richtung von unten in die Lagerbuchse 6 gesteckt und ist über einen Lagerbereich drehbar in einem korrespondierenden Abschnitt der Hülse 5b aufgenommen.

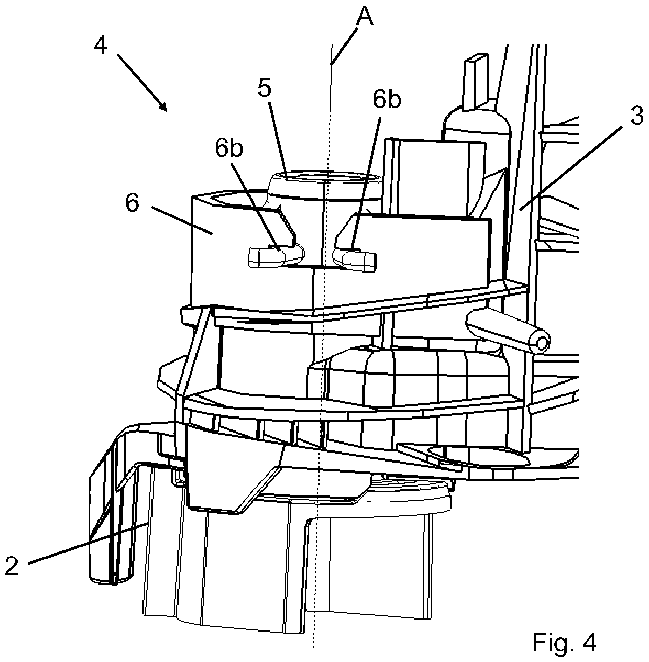

Aus der Darstellung der Figur 1, 2 und 4 ist ersichtlich, dass der Lagerzapfen 5 aus der Lagerbuchse 6 herausragt. Die Lagerbuchse 6 weist an ihrem oberen Endbereich diametral angeordnete Lagerstellen 6b auf. Diese sind ausgehend von der Stirnfläche 6c der Lagerbuchse 6 als v- förmig verlaufende vertikal ausgerichtete Nuten 6d ausgeführt, die im unteren Endbereich schlitzförmig sich erweiternd ausgeführt sind. Hierdurch bilden sich beidseits in den Nuten Lagerbereiche 6e aus. Lagerzapfen 5 und Lagerbuchse 6 der Gelenkverbindung 4 sind über das Sicherungselement 7 miteinander verbunden, welches sich an den Lagerstellen 6b der Lagerbuchse 6 und den Lagerstellen 5c des Lagerzapfens 5 abstützt. Über das Sicherungselement 7 wird die Lagerbuchse 6 gegen den Lagerzapfen 5 in z-Richtung vorgespannt gehalten. Es wird eine Sicherung der Lagerbuchse 6 gegenüber dem Lagerzapfen 5 derart gebildet, dass ein Verdrehen der Teile zueinander möglich ist, und des Weiteren ein Toleranzausgleich der Teile der Gelenkverbindung in z-Richtung d.h. in Richtung der Schwenkachse A möglich ist. Dies wird durch die spezielle Lagerung des Sicherungselementes 7 zwischen der Lagerbuchse 6 und des Lagerzapfens 5 und der Ausführung des Sicherungselements 7 als Drahtbügelelement mit federelastischen Eigenschaften erreicht.

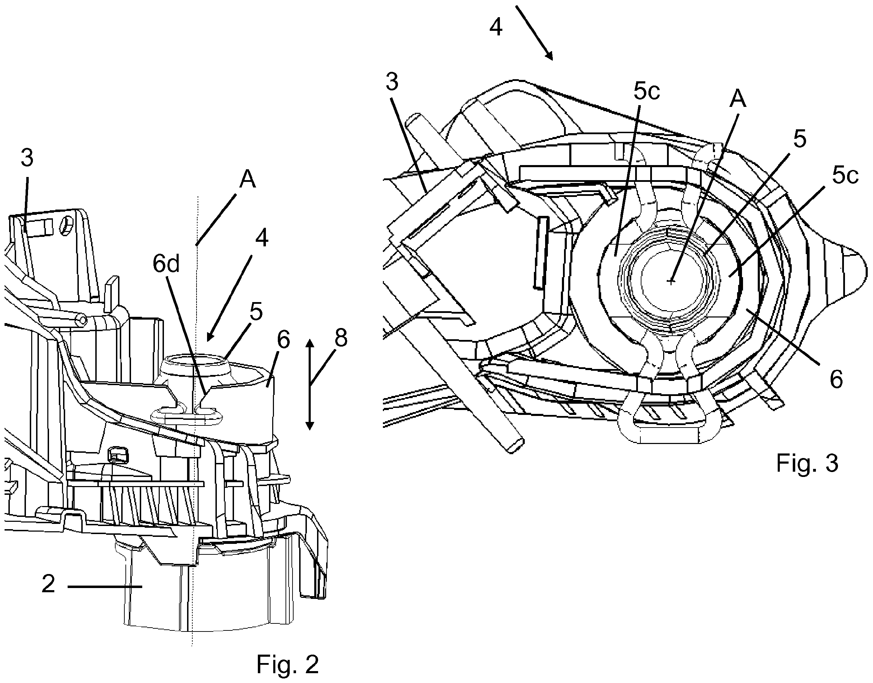

Das Drahtbügelelement ist ebenso in der Figur 5 als Einzelteil dargestellt und ist ein gebogenes Drahtelement aus einem federelastischen Draht welches um eine Längsachse B symmetrisch ausgeführt ist. Das Sicherungselement 7 weist dabei einen ersten schlaufenförmigen Endbereich 7a und einen zweiten offenen Endbereich 7b auf, der schräg nach außen verlaufende Endabschnitte besitzt. Zwischen den beiden Endbereichen 7a, 7b ist ein zylindrisch gebogener Abschnitt als mittlerer Abschnitt 7c vorgesehen, der an den Außendurchmesser des Lagerzapfens 5 angepasst ist. Im zusammengebauten Zustand der Gelenkverbindung 4, der in den Figuren 2, 3 und 4 dargestellt ist, sind die Endbereiche 7a, 7b des Sicherungselementes in den Lagerstellen 6b bzw. 6e eingespannt gehalten. An dem Lagerzapfen 5 liegt der mittlere Abschnitt 7c vorgespannt an dessen Außendurchmesser an und stützt sich von unten an den nasenförmigen Lagerstellen 5c als Gegenlagerstellen ab. Durch die federelastische Ausbildung des Sicherungselementes 7 ist ein Toleranzausgleich in z-Richtung bei einer Relativbewegung zwischen Lagerbuchse 6 und Lagerzapfen 5 um einige Millimeter möglich. Dies ist durch den Doppelpfeil 8 dargestellt.

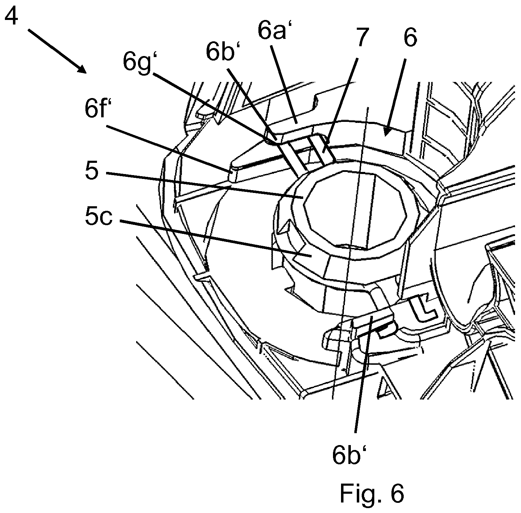

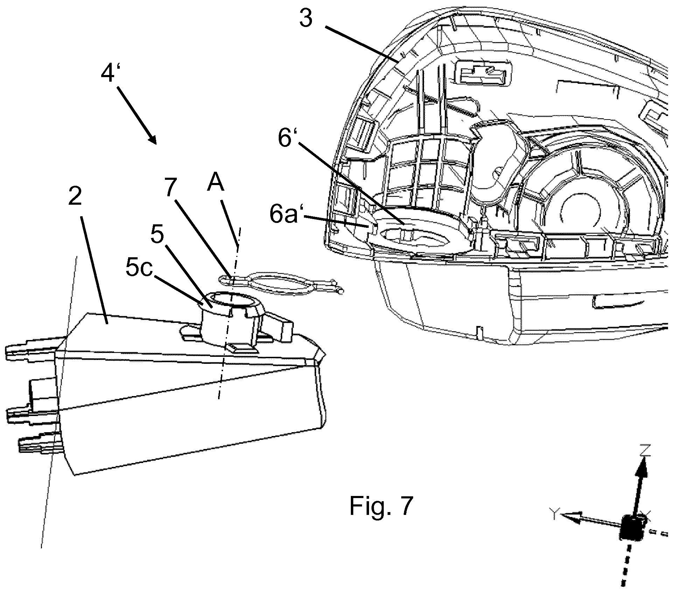

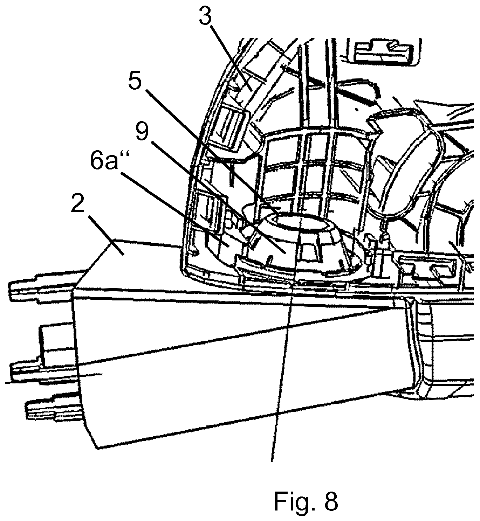

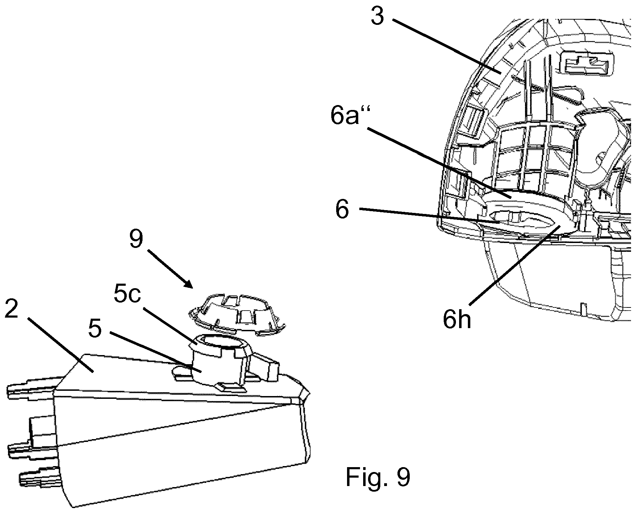

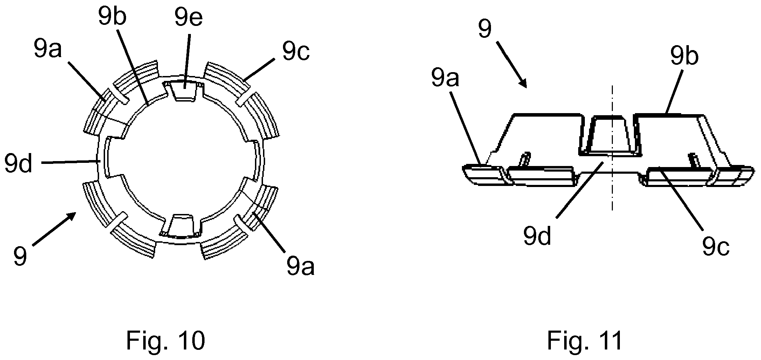

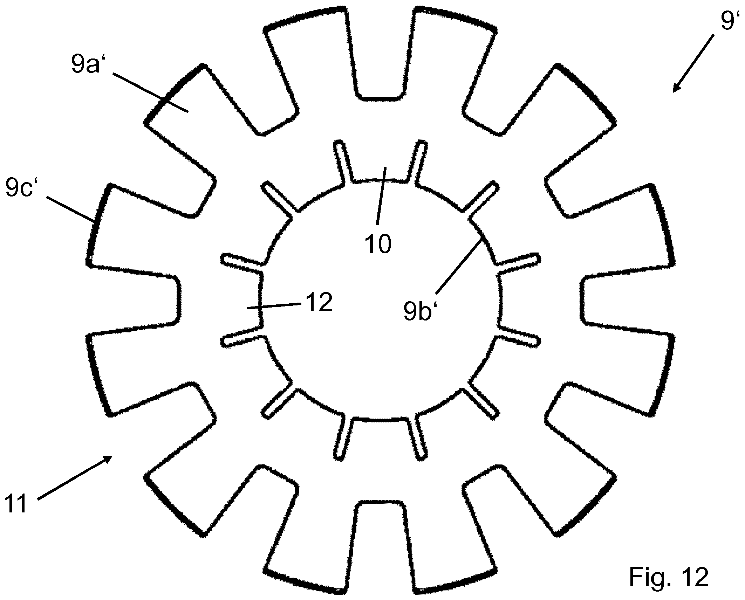

Die Figuren 6 und 7 zeigen in einer alternativen zweiten Ausführungsform eine erfindungsgemäße Gelenkverbindung 4'. Gleiche Teile werden in den Zeichnungen mit gleichen Bezugszeichen gekennzeichnet und an dieser Stelle nicht näher beschrieben. Wie es aus den Figuren ersichtlich ist, unterscheidet sich die zweite Ausführungsform in der Ausführung des hülsenförmigen Abschnitts 6a' der Lagerbuchse 6. Der hülsenförmige Abschnitt 6a' ist hierbei nur als halbkreisförmig ausgeführter Hülsenabschnitt ausgebildet. Dieser hülsenförmige Abschnitt 6a' weist ebenfalls diametral gegenüberliegend angeordnete Lagerstellen 6b' auf. Hierbei ist die erste dieser Lagerstellen 6b' ausgehend von der Stirnfläche des hülsenförmigen Abschnitts 6a' als vertikal eingebrachte Nut ausgeführt, die im unteren Endbereich schlitzförmig sich erweiternd ausgebildet ist. Die zweite gegenüberliegende Lagerstelle ist ausgehend von einer Seitenfläche 6f' des hülsenförmigen Abschnitts 6a' als quer verlaufende Nut 6g' ausgebildet. Wie bereits zu den Figuren 1-5 beschrieben wird die Verbindung zwischen Lagerbuchse 6 und Lagerzapfen 5 über das Sicherungselement 7 erreicht. Die Ausführung und Anordnung der Lagerstellen 6b' an der Lagerbuchse 6 sowie der Lagerstellen 5c an dem Lagerzapfen bewirkt im montierten Zustand des Sicherungselementes ebenfalls eine Verbindung zwischen Lagerbuchse und Lagerhülse, wobei einerseits ein Verschwenken um die Schwenkachse A des Spiegelkopfes zu dem Spiegelfuß möglich ist und andererseits auch ein Toleranzausgleich in Richtung der Schwenkachse A zwischen Lagerbuchse und Lagerzapfen möglich ist.

Es ist selbstverständlich, dass die Lagerbuchse als auch der Lagerzapfen als separates Bauteil ausgeführt sein können und mittels geeigneter Befestigungsmittel an dem Spiegelglasträgerelement bzw. Spiegelfuß befestigt werden.

## Patentansprüche

1. Außenspiegel mit einem an der Fahrzeugkarosserie festlegbaren Spiegelfuß (2) und einem ein Spiegelglasträgerelement (3) umfassenden Spiegelkopf, wobei zwischen Spiegelfuß (2) und Spiegelkopf eine Gelenkverbindung (4) vorgesehen ist, die eine schwenkbare Lagerung zwischen Spiegelfuß (2) und Spiegelkopf um eine Schwenkachse (A) ermöglicht, wobei die Gelenkverbindung (4) eine Lagerbuchse (6) und einen Lagerzapfen (5) umfasst, welche über ein Sicherungselement (7) kraft- und/oder formschlüssig miteinander verbindbar sind, und wobei sich das Sicherungselement (7) zur Erzielung einer Vorspannung in Richtung der Schwenkachse (A) der Lagerbuchse (6) gegen den Lagerzapfen (5) einerseits an einer Anzahl Lagerstellen (6b) an der Lagerbuchse (6) und andererseits an einer Anzahl Gegenlagerstellen (5c) an dem Lagerzapfen (5) abstützt, und wobei das Sicherungselement (7) weiterhin derart ausgeführt ist, dass ein Toleranzausgleich in Achsrichtung (z-Achse) zwischen Lagerzapfen (5) und Lagerbuchse (6) möglich ist, **dadurch gekennzeichnet, dass** das Sicherungselements (7) als Drahtbügelelement mit federelastischen Eigenschaften ausgeführt ist.

2. Außenspiegel nach Anspruch 1, wobei die Anzahl Lagerstellen (6b) der Lagerbuchse (6) an dem oberen Endbereich der Lagerbuchse (6) diametral angeordnete Lagerstellen (6b) sind, und diese ausgehend von einer Stirnfläche (6c) der Lagerbuchse (6) als v- förmig verlaufende vertikal ausgerichtete Nuten (6d) ausgeführt sind, die im unteren Endbereich schlitzförmig sich erweiternd ausgeführt, und hierdurch beidseits in den Nuten Lagerbereiche (6e) ausgebildet sind.

3. Außenspiegel nach Anspruch 1 oder 2, wobei die Anzahl Gegenlagerstellen (5c) des Lagerzapfens (5) im oberen Endbereich des Lagerzapfens (5) als diametral gegenüberliegend nasenförmige radial sich nach außen erstreckende Lagerstellen (5c) ausgebildet sind.

4. Außenspiegel nach Anspruch 1 oder 2, wobei die Anzahl Gegenlagerstellen (5c) des Lagerzapfens (5) im oberen Endbereich des Lagerzapfens (5) als ein umlaufender radial sich erstreckender ringförmiger Lagerbereich ausgeführt ist, der vorzugsweise am Lagerzapfen (5) angeformt ist.

5. Außenspiegel nach Anspruch 1, wobei das Drahtbügelelement ein gebogenes Drahtelement aus einem federelastischen Draht ist, welches um eine Längsachse B symmetrisch ausgeführt ist, und wobei dieses Drahtelement einen ersten schlaufenförmigen Endbereich (7a) und einen zweiten offenen Endbereich (7b) aufweist, der schräg nach außen verlaufende Endabschnitte besitzt, wobei zwischen den beiden Endbereichen (7a, 7b) ein zylindrisch gebogener Abschnitt als mittlerer Abschnitt (7c) vorgesehen ist, der an den Außendurchmesser des Lagerzapfens (5) angepasst ist.

## Claims

1. Exterior mirror with a mirror foot (2) which can be secured to the vehicle body, and with a mirror head comprising a mirror support element (3), wherein an articulated connection (4) is provided between the mirror foot (2) and the mirror head, said articulated connection enabling the mirror foot (2) and mirror head to be mounted pivotably about a pivot axis (A), wherein the articulated connection (4) comprises a bearing bushing (6) and a bearing journal (5) which are connectable to each other in a force- and/or form-fitting manner via a securing element (7), and wherein, in order to obtain a prestress in the direction of the pivot axis (A) of the bearing bushing (6) against the bearing journal (5), the securing element (7) is supported firstly on a plurality of bearing points (6b) on the bearing bushing (6) and secondly on a plurality of counterbearing points (5c) on the bearing journal (5), and wherein the securing element (7) is furthermore designed in such a manner that it is possible to compensate for tolerances in the axial direction (z axis) between bearing journal (5) and bearing bushing (6), **characterized in that** the securing element (7) is designed as a wire clip element having spring-elastic properties.

2. Exterior mirror according to Claim 1, wherein the plurality of bearing points (6b) of the bearing bushing (6) at the upper end region of the bearing bushing (6) are diametrically arranged bearing points (6b), and the latter, starting from an end surface (6c) of the bearing bushing (6), are in the form of vertically aligned grooves (6d) which run in a V-shaped manner and are designed expanding in a slot-shaped manner in the lower end region, and bearing regions (6e) are thereby formed on both sides in the grooves.

3. Exterior mirror according to Claim 1 or 2, wherein the plurality of counterbearing points (5c) of the bearing journal (5) in the upper end region of the bearing journal (5) are in the form of lug-shaped, radially outwardly extending bearing points (5c) lying diametrically opposite.

4. Exterior mirror according to Claim 1 or 2, wherein the plurality of counterbearing points (5c) of the bearing journal (5) in the upper end region of the bearing journal (5) are in the form of an encircling, radially extending, annular bearing region which is preferably integrally formed on the bearing journal (5).

5. Exterior mirror according to Claim 1, wherein the wire clip element is a bent wire element composed of a spring-elastic wire which is formed symmetrically about a longitudinal axis B, and wherein said wire element has a first loop-shaped end region (7a) and a second open end region (7b) which has end portions running obliquely outwards, wherein a cylindrically curved portion is provided between the two end regions (7a, 7b) as a central portion (7c) which is matched to the external diameter of the bearing journal (5).

## Revendications

1. Rétroviseur extérieur avec un pied de rétroviseur (2) pouvant être fixé à la carrosserie de véhicule et une tête de rétroviseur comprenant un élément de support de vitre de rétroviseur (3), dans lequel il est prévu entre le pied de rétroviseur (2) et la tête de rétroviseur une liaison articulée (4), qui permet un support pivotant autour d'un axe de pivotement (A) entre le pied de rétroviseur (2) et la tête de rétroviseur, dans lequel la liaison articulée (4) comprend un coussinet de palier (6) et un axe de palier (5), qui peuvent être assemblés l'un à l'autre par force et/ou par emboîtement au moyen d'un élément de fixation (7), et dans lequel l'élément de fixation (7) prend appui, pour obtenir une précontrainte dans la direction de l'axe de pivotement (A) du coussinet de palier (6) contre l'axe de palier (5), d'une part sur un nombre de points d'appui (6b) sur le coussinet de palier (6) et d'autre part sur un nombre de points de contre-appui (5c) sur l'axe de palier (5), et dans lequel l'élément de fixation (7) est en outre configuré de telle manière qu'une compensation de tolérances dans la direction axiale (axe z) soit possible entre l'axe de palier (5) et le coussinet de palier (6), **caractérisé en ce que** l'élément de fixation (7) est réalisé sous la forme d'un élément d'étrier en fil avec des propriétés élastiques de ressort.

2. Rétroviseur extérieur selon la revendication 1, dans lequel le nombre de points d'appui (6b) du coussinet de palier (6) sont des points d'appui (6b) diamétralement disposés sur la région d'extrémité supérieure du coussinet de palier (6), et ceux-ci sont réalisés à partir d'une face frontale (6c) du coussinet de palier (6) sous la forme de rainures (6d) s'étendant en forme de v orientées verticalement, qui sont réalisées dans la région d'extrémité inférieure en s'élargissant en forme de fente, et de ce fait des zones d'appui (6e) sont formées de part et d'autre dans les rainures.

3. Rétroviseur extérieur selon la revendication 1 ou 2, dans lequel le nombre de points de contre-appui (5c) de l'axe de palier (5) sont formés dans la région d'extrémité supérieure de l'axe de palier (5) sous la forme de points d'appui (5c) en forme d'ergots diamétralement opposés qui s'étendent radialement vers l'extérieur.

4. Rétroviseur extérieur selon la revendication 1 ou 2, dans lequel le nombre de points de contre-appui (5c) de l'axe de palier (5) sont réalisés dans la région d'extrémité supérieure de l'axe de palier (5) sous la forme d'une zone d'appui périphérique annulaire s'étendant radialement, qui est de préférence formée sur l'axe de palier (5).

5. Rétroviseur extérieur selon la revendication 1, dans lequel l'élément d'étrier en fil est un élément en fil plié en un fil élastique, qui est réalisé sous forme symétrique par rapport à un axe longitudinal B, et dans lequel cet élément en fil présente une première région d'extrémité en forme de boucle (7a) et une deuxième région d'extrémité ouverte (7b), qui comporte des sections d'extrémité s'étendant en oblique vers l'extérieur, dans lequel il est prévu entre les deux régions d'extrémité (7a, 7b) une section courbée en cylindre en tant que section médiane (7c), qui est adaptée au diamètre extérieur de l'axe de palier (5).
